# EUROPEAN PATENT SPECIFICATION

(11) **EP 4 419 274 B1**
(45) Date of publication and mention of the grant of the patent: **14.05.2025**
(21) Application number: 21851849.6
(22) Date of filing: 27.12.2021
(51) Int. Cl.: B22F 1/054, B22F 9/24, C09B 3/14, C09B 67/42

(54) **METHOD FOR PRODUCING SILVER NANOWIRES**
VERFAHREN ZUR HERSTELLUNG VON SILBERNANODRÄHTEN
PROCÉDÉ DE PRODUCTION DE NANOFILS D'ARGENT

(30) Priority: 22.12.2021 PT 2021117673
(43) Date of publication of application: 28.08.2024
(73) Proprietor: Bosch Car Multimedia Portugal, S.A., 4705-820 Braga (PT); Universidade do Minho, 4700-320 Braga (PT)
(72) Inventor: ARAÚJO, Rui Filipe, 4705-820 Braga (PT); CARVALHO CEREJEIRA FONTES DELGADO, Isabel Alexandra, 4705-820 Braga (PT); DE BARROS ALVES, José Ricardo, 4705-820 Braga (PT); PITÃES FIGUEIREDO, Hugo Sérgio, 4705-820 Braga (PT); RIBEIRO MARINHO, Elina Margarida, 4704-553 Braga (PT); DE JESUS PAIVA PROENÇA, Maria Fernanda, 4704-553 Braga (PT); JESUS REGO PAIVA, Maria Conceição, 4704-553 Braga (PT); CALDEIRA LOPES, Paulo Estevão, 4704-553 Braga (PT)
(74) Representative: Couto, Cláudia
(86) International application number: PCT/IB2021/062339
(87) International publication number: WO 2023/118954

(56) References cited:
- EP-A1- 2 626 359
- US-A1- 2015 336 173

## Description

### Technical field

This application relates to a method for producing silver nanowires and a method for producing nanowires on carbon-based materials, as well as a method to produce a perylene bisimide compound. The application also relates to a device suitable to carry out both methods described herein.

### Background art

Several methods for producing silver nanowires have been proposed previously.

Document US7585349 B discloses a process for producing silver nanoparticles consisting of a silver nitrate reaction with polyvinylpyrrolidone (PVP) in the presence of ethylene glycol. Depending on the reaction conditions different morphology and dimensions, namely silver nanowires, can be obtained.

Document WO14169487 A1 discloses the synthesis of silver nanowires using polyquaterniums and silver salts.

Document US2015336173 AA discloses silver nanowires produced by mixing and heating (polyol method) a silver salt precursor, a reducing solvent (a reduction agent), and capping agent such as vinylpyrrolidone-co-vinylimidazole copolymers (PIC) instead of PVP.

Document US10220441 B2 discloses a method for producing silver nanowires, in an alcohol solvent having dissolved therein a silver compound, a chloride, a bromide, an alkali metal hydroxide, an aluminium salt and an organic protective agent.

Document US2020157657 discloses a metal aerogel includes a plurality of metal nanowires formed into a porous three-dimensional structure where pores in the structure are anisotropic, however there is no mention of using perylene bisimide in the synthesis, using PVP instead.

Document US8454721 B2 discloses a method of forming monodispersed metal nanowires from silver nitrate, no mention is made to using perylene bisimide in the method.

Document KR20200098256 A discloses a method for manufacturing a functional polymer nanofiber composite and a method for manufacturing a functional substrate using the same. No mention is made to using perylene bisimide in the method.

### Summary

The present invention relates to a method for producing silver nanowires according to claim 1. Preferred embodiments are defined in the dependent claims.

In one embodiment the silver metal salt is selected from silver nitrate or silver acetate.

In one embodiment a carbon-based material is added to the mixture in a ratio of perylene bisimide of formula (3), silver metal salt and carbon-based material in a 1:4:2.3 to 1:35:2.3 mass ratio.

In one embodiment the carbon-based material is selected from carbon nanotubes, multi-walled carbon nanotubes, single wall carbon nanotube, carbon nanofibers and graphene nanoplatelets.

In one embodiment the solvent is selected from ethylene glycol, or a mixture of dimethylformamide and water.

In one embodiment ethylene glycol is added in a variable amount maintaining the concentration of silver metal salt between 4 mg/ml to 18 mg/ml.

In one embodiment a mixture of dimethylformamide and water in a ratio of 30:1 to 100:1 is added in a variable amount, maintaining the concentration of silver metal salt between 6 mg/ml to 50 mg/ml.

In one embodiment the resulting precipitate is washed with ethanol and dried at a temperature between 70 °C and 100 °C to obtain dried silver nanowires.

In one embodiment the mixture is sonicated before heating when ethylene glycol is used as solvent.

In one embodiment, when a mixture of dimethylformamide and water is used as solvent, two additional aliquots of the initial amount of water are added every two hours to the mixture under heat.

### General description

The present invention relates to a method for producing silver nanowires, through reduction and silver precipitation in the form of wire in a solvent having dissolved therein a silver compound and a perylene bisimide (PBI) of formula (3).

Depending on the solvent and reducing agent used, silver nanowires with different shapes are obtained. Furthermore, this invention also relates to the synthesis of silver nanowires *in situ* on carbon-based materials, such as carbon nanotubes (CNT).

The present invention proposes to solve the problems in the field and provide a simple method for the production of silver nanowires with industrial potential to be used as conductive filler in fields of application, such as conductive adhesives and conductive inks for electronic applications.

According to the invention, short and long silver nanowires can be stably produced with high yields. Silver nanowires can be advantageous for different applications, such as production of conductive adhesives or conductive inks. The simplicity of the production methods herein presented may allow industrialization at very competitive costs.

Furthermore, the use of perylene bisimides of formula (3) coordinated with silver salts enables the synthesis of silver nanowires with high yields using dimethylformamide/water (DMF/H₂O) or ethylene glycol (EG) as solvent and reducing agent, with no need to use high molecular weight protective agents, such as PVP.

### Brief description of drawings

For easier understanding of this application, figures are attached in the annex that represent the preferred forms of implementation which nevertheless are not intended to limit the technique disclosed herein.
Figure 1 shows the reaction of dianhydride (1) with diamine (2) to obtain perylene bisimide (3).
Figure 2 shows two scanning electron microscopy images of the silver nanowires synthesized according to the experimental protocol described in Example 2.
Figure 3 shows three scanning electron microscopy images of the silver nanowires synthesized according to the experimental protocol described in Example 3.
Figure 4 shows four scanning electron microscopy images of the silver nanoparticles synthesized in the presence of multi-walled and single-walled carbon nanotubes according to the experimental protocol described in Example 4. A relates to silver nanowires in the presence of multi-walled carbon nanotubes and B relates to silver nanowires in the presence single wall carbon nanotubes.
Figure 5 shows four scanning electron microscopy images of the silver nanoparticles synthesized in the presence of multi-walled and single-walled carbon nanotubes according to the experimental protocol described in Example 5. A relates to silver nanowires in the presence of multi-walled carbon nanotubes and B relates to silver nanowires in the presence single wall carbon nanotubes.
Figure 6 shows two scanning electron microscopy images of silver nanoparticles synthesized in the presence of single-walled carbon nanotubes according to the experimental protocol described in Example 6.

### Description of embodiments

Now, preferred embodiments of the present application will be described in detail with reference to the annexed drawings. However, they are not intended to limit the scope of this application.

The method for producing silver nanowires comprises the following steps:
- Heating and stirring a mixture of perylene bisimide of formula (3) and a silver metal salt in a 1:25 to 1:35 mass ratio, at a temperature between 130 °C and 170 °C, during 3 h to 14 h, in the presence of a solvent;
- Cooling the solution between 20 and 25°C for 16 h to 20 h;
- Collecting and filtering the resulting precipitate to isolate the silver nanowires.

The silver nanowires of the present invention can also be produced in the presence of cabon-based materials, following the same method.

The method for producing silver nanowires on carbon-based materials comprises the following steps:
- Heating and stirring a mixture of perylene bisimide of formula (3), silver metal salt and a carbon-based material in a 1:4:2.3 to 1:35:2.3 mass ratio, at a temperature between 130 °C and 170 °C, during 3 h to 14 h, in the presence of a solvent;
- Cooling the solution between 20 and 25°C for 16 h to 20h;
- Collecting and filtering the resulting precipitate to isolate the silver nanowires in the presence of the carbon nanomaterial.

In one embodiment, the silver metal salt is selected from silver nitrate or silver acetate.

In one embodiment the solvent is selected from ethylene glycol in a variable amount maintaining the concentration of silver metal salt between 4 mg/ml to 18 mg/ml, or a mixture of dimethylformamide and water in a ratio of 30:1 to 100:1, in a variable amount, maintaining the concentration of silver metal salt between 6 mg/ml to 50 mg/ml.

In the present method the solvent acts as a reducing agent.

The synthesis of silver nanowires was carried out in the presence of PBI of formula (3) coordinated with the silver ion that is reduced in the presence of ethylene glycol or dimethylformamide/water.

In one embodiment the mixture is preferably heated at 150°C.

In one embodiment the resulting precipitate obtained is washed with ethanol and dried at a temperature between 70 °C and 100 °C, preferably 100°C, to obtain dried silver nanowires.

In one embodiment the mixture is sonicated before heating when ethylene glycol is used as solvent.

In one embodiment, when a mixture of dimethylformamide and water is used as solvent, two additional aliquots of the initial amount of water are added every two hours to the mixture under heat.

In one embodiment the cabon-based materials are selected from, but not limited to, carbon nanotubes (CNT), multi-walled carbon nanotubes (MWCNTs), single wall carbon nanotube (SWCNTs), carbon nanofibers and graphene nanoplatelets.

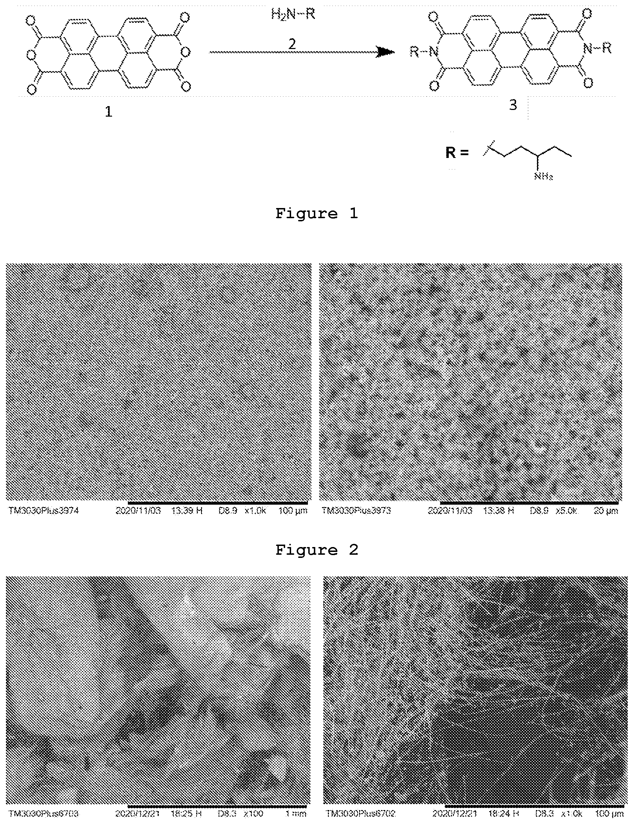

The synthesis of PBI (3) resulted from the combination of the commercially available perylenetetracarboxilic dianhydride with 1,3-diaminopentane (Figure 1) at 100 °C.

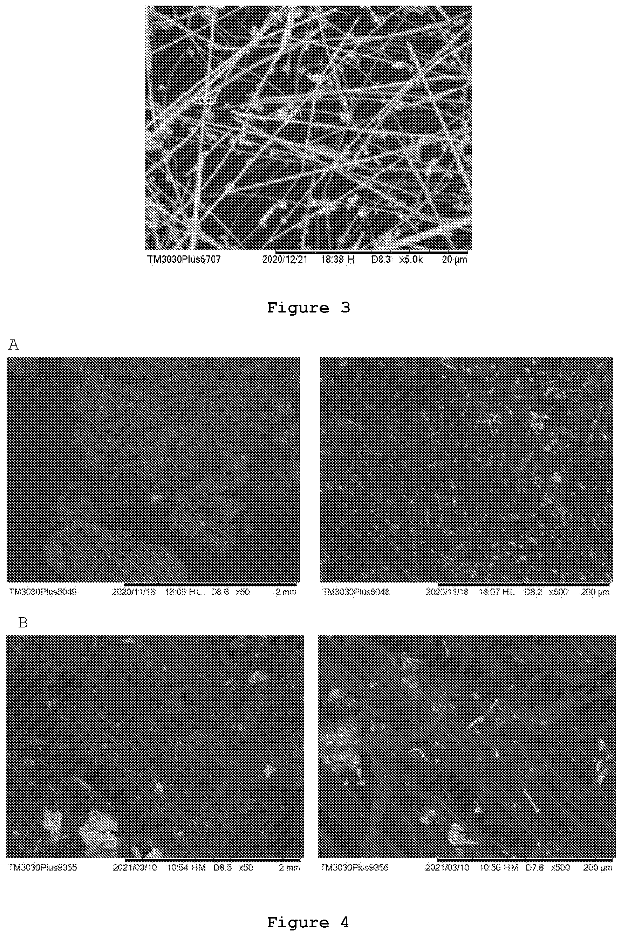

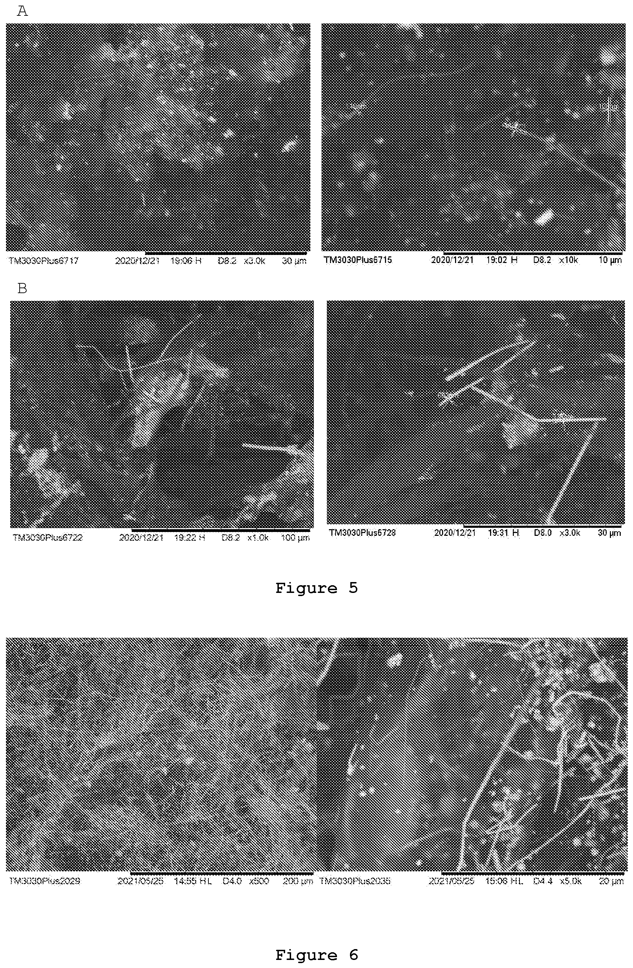

The possibility to prepare silver nanowires in the presence of carbon-based material, such as CNT was also demonstrated in Examples 4 and 5; Figure 4 and 5.

Once again, the concentration of PBI showed to be determinant for the synthesis of silver nanowires. For reactions carried out in ethylene glycol the range of PBI concentration varied from 0.13 mg/mL to 2.5 mg/mL, the best results were obtained with 0.28 mg/mL (example 3). In DMF/water the range of PBI concentration varied from 0.26 mg/mL to 2.17 mg/mL and the best results were obtained with 2.17 mg/mL (example 2).

Parameters such as temperature and reaction time can influence the shape and growth of the silver nanoparticles. The synthesis of silver nanowires was performed in a temperature range from 130 °C to 170 °C and reaction time from 3 h to 7 h. The best results were obtained at 150 °C for 7 h.

The morphology of the silver nanowires depends on the concentration of PBI (3). The studies showed that, depending on the solvent, different shapes of silver nanowires can be obtained.

In one embodiment, short silver nanowires can be obtained when DMF/H₂O is used as solvent (Example 2; Figure 2).

In another embodiment, long silver nanowires with a length up to 0.5 mm can be obtained when ethylene glycol is used as solvent (Example 3; Figure 3).

Herein below, specific examples of the present invention will be presented. The examples described below are intended to facilitate the understanding of the present disclosure, however the present disclosure is not limited to these examples.

### Examples

### Comparative example 1(not forming part of the invention) - Synthesis of PBI of formula (3)

Approximately 10 equiv. (4.83 mL) of 1,3-diaminopentane (2) were added to 3.96 mmol (1.56 mg) of perylenetetracarboxilic dianhydride (1) (as shown in scheme of Figure 1). The mixture was heated at 100 °C under magnetic stirring for approximately 3.5 h. Distilled water was added to the mixture and the suspension was filtered and washed with additional water, ethanol and diethyl ether. The product (PBI) was finally dried under vacuum at 100 °C for 16 h (reaction yield: 98 %).

### Example 2

In a 50 mL flask, 1.06 mmol (179.3 mg) of AgNO₃, 20 mL of dimethylformamide (DMF) and 200 µL of water were added to 0.08 mmol (44.6 mg) of PBI (3), prepared according to the procedure described in comparative example 1, and the mixture was maintained under magnetic stirring (100 rpm) at a temperature between 20 and 30°C for 16 h. The reaction proceeded at 150 °C for 7 h under magnetic stirring (50 rpm) and two additional aliquots of water were added during the reaction time, one after 2h and the other after 4 h of reaction. The solution was cooled to 25 °C during 16 h and the precipitated solid was collected by filtration, washed with ethanol and dried at 100 °C under vacuum for 16 h. Final weight: 89.8 mg; reaction yield 79 %. The material obtained was finally observed by scanning electron microscopy (Figure 2).

### Example 3

In a 50 mL flask, 0.01 mmol (5.6 mg) of PBI (3) prepared according to the procedure described in comparative example 1 and 1.04 mmol (177.4 mg) of AgNO3 were dissolved in 20 mL of EG under sonication in an ultra-sound bath at a temperature between 20 and 30°C for 5 min. After sonication, the reaction was carried out at 150 °C for 7 h under magnetic stirring (50 rpm). The solution was cooled to 25 °C during 16 h and the precipitated solid was collected by filtration, washed with ethanol and dried at 100 °C under vacuum for 16 h. Final weight: 105.3 mg; reaction yield: 93 %. The material obtained was finally observed by scanning electron microscopy (Figure 3).

### Example 4

In a 50 mL flask, 1.06 mmol of AgNO3 and 100 mg of CNTs (MWCNTs or SWCNTs) were combined with 0.08 mmol of PBI (3) prepared according to the procedure described in comparative example 1 and added to 20 ml of dimethylformamide with 200 µl of water. The mixture was maintained under magnetic stirring (300 rpm) at a temperature between 20 and 30°C for 16 h. The reaction proceeded at 150 °C for 7 h under magnetic stirring (100 rpm). The solution was cooled to a temperature between 20 and 25°C for 16 h and the precipitated solid was collected by filtration, washed with ethanol, dried at 100 °C under vacuum for 16 h. Final weight: 240 - 260 mg; reaction yield: 90 - 95 %. The material obtained was finally observed by scanning electron microscopy (Figure 4).

### Example 5

In a 50 mL flask, 0.08 mmol of PBI (3) prepared according to the procedure described in comparative example 1, 1.04 mmol of AgNO₃ and 100 mg of CNTs (MWCNTs or SWCNTs) were dissolved/dispersed in 20 mL of EG under sonication in an ultra-sound bath at a temperature between 20 and 30°C for 1 h. After sonication, the reaction was carried out at 150 °C for 7 h under magnetic stirring (50 rpm). The solution was cooled to 25 °C during 16 h and the precipitated solid was collected by filtration, washed with ethanol, dried at 100 °C under vacuum for 16 h. Final weight: 190 - 240 mg; reaction yield: 40 - 87 %. The material obtained was finally observed by scanning electron microscopy (Figure 5).

### Example 6

The production of silver nanowires in the presence of carbon nanotubes was conducted in three main steps:

### 1) Complexation of silver ion with PBI (3)

A solution 1 of synthesized PBI (0.53 g; 0.94 mmol), in DMF (40 mL) and another solution 2 of AgNO3, (0.32 g; 1.88 mmol; 2 equiv.) in ethanol (20 mL), were stirred for 15 min at room temperature. Solution 2 was added to solution 1 and the resulting mixture was stirred at room temperature for 8 days. At the end of the reaction, diethyl ether and n-hexane (1:1) were added and the solid was filtered, washed with diethyl ether and n-hexane and dried for 24h at 100°C under vacuum. Final weight of PBI-Ag: 457.4 mg.

### 2) Adsorption of PBI (3) previously complexed with silver ion on the surface of SWCNTs

A suspension 1 of functionalized SWCNTs (73.4 mg) in 8 mL of DMF and a solution 2 with the PBI-Ag (36.4 mg), in 6 mL of ethanol, were stirred for 15 min between 20 and 30 °C. Solution 2 was added to suspension 1 and the resulting mixture was stirred at 20 to 30 °C for 1 day. At the end of the reaction diethyl ether and n-hexane (1:1), were added and the solid was filtered, washed with diethyl ether and n-hexane and dried, for 24h at 100°C under vacuum. Final weight of PBI-Ag-SWCNTs: 113.0 mg.

### 3) Growth of silver wires

To 30.6 mg of the solid collected from step 2 (PBI-Ag-SWCNTs) was added 20 mL of EG and 177.5 mg of AgNO3. The mixture was sonicated in an ultra-sound bath at a temperature between 20 and 30°C for 1 h. After sonication, the reaction was carried out at 150 °C for 7 h under magnetic stirring (50 rpm). The solution was cooled to 25 °C during 16 h and the precipitated solid was collected by filtration, washed with ethanol and dried at 100 °C under vacuum. Final weight: 120.6 mg. The material obtained was finally observed by scanning electron microscopy (Figure 6).

The following claims further define the preferred forms of implementation.

## Claims

1. A method for producing silver nanowires comprising the following steps:
Heating and stirring a mixture of perylene bisimide of formula (3) and a silver metal salt in a 1:25 to 1:35 mass ratio, at a temperature between 130 °C and 170 °C, during 3 h to 14 h, in the presence of a solvent;
Cooling the solution between 20 and 25°C for 16 h to 20 h;
Collecting and filtering the resulting precipitate to isolate the silver nanowires;
wherein formula (3) is

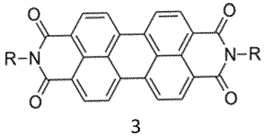

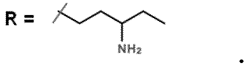

2. Method according to the previous claim, wherein the silver metal salt is selected from silver nitrate or silver acetate.

3. Method according to any of the previous claims, wherein a carbon-based material is added to the mixture in a ratio of perylene bisimide of formula (3), silver metal salt and carbon-based material in a 1:4:2.3 to 1:35:2.3 mass ratio.

4. Method according to the previous claim, wherein the carbon-based material is selected from carbon nanotubes, multi-walled carbon nanotubes, single wall carbon nanotube, carbon nanofibers and graphene nanoplatelets.

5. Method according to any of the previous claims, wherein the solvent is selected from ethylene glycol, or a mixture of dimethylformamide and water.

6. Method according to any of the previous claims wherein ethylene glycol is added in a variable amount maintaining the concentration of silver metal salt between 4 mg/ml to 18 mg/ml.

7. Method according to any of the claims 1 to 5 wherein a mixture of dimethylformamide and water in a ratio of 30:1 to 100:1 is added in a variable amount, maintaining the concentration of silver metal salt between 6 mg/ml to 50 mg/ml.

8. Method according to any of the previous claims, wherein the resulting precipitate is washed with ethanol and dried at a temperature between 70 °C and 100 °C to obtain dried silver nanowires.

9. Method according to any of the previous claims, wherein the mixture is sonicated before heating when ethylene glycol is used as solvent.

10. Method according to any of the previous claims, wherein when a mixture of dimethylformamide and water is used as solvent two additional aliquots of the initial amount of water are added every two hours to the mixture under heat.

## Patentansprüche

1. Ein Verfahren zur Herstellung von Silbernanodrähten, das die folgenden Schritte umfasst:
Erhitzen und Rühren einer Mischung aus Perylenbisimid der Formel (3) und einem Silbermetallsalz im Massenverhältnis von 1:25 bis 1:35 bei einer Temperatur zwischen 130 °C und 170 °C über einen Zeitraum von 3 bis 14 Stunden in Anwesenheit eines Lösungsmittels;
Kühlen der Lösung zwischen 20 und 25°C während eines Zeitraums von 16 bis 20 Stunden;
Sammeln und Filtern des resultierenden Präzipitats zur Isolierung der Silbernanodrähte;
wobei die Formel (3) 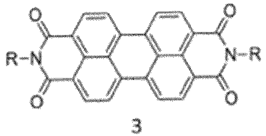 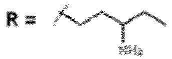 ist.

2. Verfahren gemäß dem vorhergehenden Anspruch, wobei das Silbermetallsalz aus Silbernitrat oder Silberacetat ausgewählt ist.

3. Verfahren gemäß einem der vorhergehenden Ansprüche, wobei ein kohlenstoffbasiertes Material in einem Verhältnis von Perylenbisimid der Formel (3), Silbermetallsalz und kohlenstoffbasiertem Material in einem Massenverhältnis von 1:4:2,3 bis 1:35:2,3 der Mischung zugesetzt wird.

4. Verfahren gemäß dem vorhergehenden Anspruch, wobei das kohlenstoffbasierte Material aus Kohlenstoffnanoröhren, mehrwandigen Kohlenstoffnanoröhren, einwandigen Kohlenstoffnanoröhren, Kohlenstoffnanofasern und Graphennanoplättchen ausgewählt ist.

5. Verfahren gemäß einem der vorhergehenden Ansprüche, wobei das Lösungsmittel aus Ethylenglykol oder einer Mischung aus Dimethylformamid und Wasser ausgewählt ist.

6. Verfahren gemäß einem der vorhergehenden Ansprüche, wobei das Ethylenglykol in variabler Menge zugesetzt wird, wobei die Konzentration des Silbermetallsalzes zwischen 4 mg/ml und 18mg/ml beibehalten wird.

7. Verfahren gemäß einem der Ansprüche 1 bis 5, wobei eine Mischung aus Dimethylformamid und Wasser in einem Verhältnis von 30:1 bis 100:1 in variabler Menge zugesetzt wird, wobei die Konzentration des Silbermetallsalzes zwischen 6mg/ml und 50mg/ml beibehalten wird.

8. Verfahren gemäß einem der vorhergehenden Ansprüche, wobei das erhaltene Präzipitat mit Ethanol gewaschen und anschließend bei einer Temperatur von 70°C bis 100°C getrocknet wird, wodurch getrocknete Silbernanodrähte erhalten werden.

9. Verfahren gemäß einem der vorhergehenden Ansprüche, wobei die Mischung vor dem Erhitzen soniziert wird, wenn Ethylenglykol als Lösungsmittel verwendet wird.

10. Verfahren gemäß einem der vorhergehenden Ansprüche, wobei unter Hitzeeinwirkung alle zwei Stunden zwei zusätzliche Aliquote der ursprünglichen Wassermenge der Mischung zugesetzt werden, wenn eine Mischung aus Dimethylformamid und Wasser als Lösungsmittel verwendet wird.

## Revendications

1. Procédé destiné à la production de nanofils d'argent comprenant les étapes suivantes :
le chauffage et l'agitation d'un mélange de bisimide de pérylène de formule (3) et d'un sel métallique d'argent dans un rapport massique de 1:25 à 1:35, à une température comprise entre 130 °C et 170 °C, durant 3 à 14 h, en présence d'un solvant ;
le refroidissement de la solution entre 20 et 25 °C pendant 16 à 20 h ;
la collecte et la filtration du précipité obtenu pour isoler les nanofils d'argent ;
dans lequel la formule (3) est

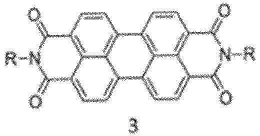

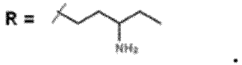

2. Procédé selon la revendication précédente, dans lequel le sel métallique d'argent est sélectionné parmi le nitrate d'argent ou l'acétate d'argent.

3. Procédé selon l'une quelconque des revendications précédentes, dans lequel un matériau à base de carbone est ajouté au mélange dans un rapport de bisimide de pérylène de formule (3), de sel métallique d'argent et de matériau à base de carbone compris dans un rapport massique entre 1:4:2,3 et 1:35:2,3.

4. Procédé selon la revendication précédente, dans lequel le matériau à base de carbone est sélectionné parmi des nanotubes de carbone, des nanotubes de carbone multiparois, un nanotube de carbone monoparoi, des nanofibres de carbone et des nanoplaquettes de graphène.

5. Procédé selon l'une quelconque des revendications précédentes, dans lequel le solvant est sélectionné parmi l'éthylène glycol, ou un mélange de diméthylformamide et d'eau.

6. Procédé selon l'une quelconque des revendications précédentes, dans lequel de l'éthylène glycol est ajouté en une quantité variable en maintenant la concentration en sel métallique d'argent entre 4 mg/ml et 18 mg/ml.

7. Procédé selon l'une quelconque des revendications 1 à 5, dans lequel un mélange de diméthylformamide et d'eau dans un rapport de 30:1 à 100:1 est ajouté en une quantité variable, en maintenant la concentration en sel métallique d'argent entre 6 mg/ml et 50 mg/ml.

8. Procédé selon l'une quelconque des revendications précédentes, dans lequel le précipité obtenu est lavé avec de l'éthanol et séché à une température comprise entre 70 °C et 100 °C pour obtenir des nanofils d'argent séchés.

9. Procédé selon l'une quelconque des revendications précédentes, dans lequel le mélange est soniqué avant le chauffage lorsque de l'éthylène glycol est utilisé en tant que solvant.

10. Procédé selon l'une quelconque des revendications précédentes, dans lequel lorsqu'un mélange de diméthylformamide et d'eau est utilisé en tant que solvant, deux parties aliquotes supplémentaires de la quantité initiale d'eau sont ajoutées toutes les deux heures au mélange, sous chauffage.
